# DEMANDE DE BREVET EUROPEEN

(11) **EP 0 647 779 A1**
(43) Date de publication de la demande: **12.04.1995**
(21) Numéro de dépôt: 94402241.7
(22) Date de dépôt: 06.10.1994
(51) Int. Cl.: F02M 25/07, F16L 27/10

(54) **Dispositif de recirculation des gaz d'échappement d'un moteur à combustion interne**

(30) Priorité: 08.10.1993 FR 9312005
(71) Demandeur: REGIE NATIONALE DES USINES RENAULT S.A., F-92109 Boulogne Billancourt (FR)
(72) Inventeur: Falck, Denis, F-75015 Paris (FR)

(57) **Abrégé**

Dispositif de recirculation des gaz d'échappement d'un moteur à combustion interne, du type comprenant une conduite de recirculation (2) des gaz d'échappement du collecteur d'échappement au collecteur d'admission (1), caractérisé en ce que la partie d'embout (12) de la conduite de recirculation (2) est raccordée au collecteur d'admission (1) par l'intermédiaire d'un manchon souple (3) réalisé en matériau à faible coefficient de conduction thermique.

## Description

La présente invention concerne un dispositif de recirculation des gaz d'échappement d'un moteur à combustion interne destiné plus particulièrement à équiper un véhicule automobile.

Les normes concernant la pollution et la consommation des moteurs à combustion interne équipant les véhicules automobiles, se sévérisent chaque jour davantage dans l'ensemble des pays industrialisés. L'industrie automobile est donc aujourd'hui occupée à trouver des solutions techniques pour répondre à ces obligations et ce, sans trop pénaliser ni les performances des moteurs ni leur prix de revient.

Une technique connue de réduction des oxydes d'azote NOx, qui forment avec les hydrocarbures imbrûlés HC et le monoxyde de carbone CO les principaux polluants émis par les moteurs à combustion interne, consiste à opérer la recirculation d'une partie des gaz d'échappement dans les gaz frais d'admission. Cette technique consiste donc à réinjecter une quantité prédéterminée de gaz brûlés suivant les conditions de fonctionnement du moteur, dans le collecteur d'admission. Cet apport de gaz brûlés dans les gaz frais a pour effet de réduire la proportion de ces derniers au sein du mélange carburé introduit dans la chambre de combustion et donc d'abaisser la température de combustion, ce qui engendre une diminution de la production des NOx ou oxydes d'azote.

Le procédé généralement adopté est la "recirculation externe" des gaz d'échappement à l'aide d'une vanne EGR (Recyclage des Gaz d'Echappement) fermant ou ouvrant une conduite reliant le collecteur d'échappement et le collecteur d'admission. La vanne EGR est pilotée de façon à doser la quantité des gaz d'échappement admis à recirculer suivant les conditions de fonctionnement du moteur.

La conduite de recirculation a donc sa partie d'embout directement raccordée au collecteur d'admission. Pour ce faire, la partie d'embout comporte solidaire de celle-ci, par exemple par soudage, une bride de fixation de la conduite de recirculation au collecteur d'admission. La bride de fixation est immobilisée sur le collecteur d'admission avec interposition d'un joint d'étanchéité, au moyen de vis de fixation venant se loger dans des alésages taraudés correspondants usinés sur le collecteur d'admission.

Or les dispersions dues aux tolérances de fabrication font qu'au montage la conduite de recirculation se trouve parfois légèrement décalée dans l'espace, la bride de fixation n'étant plus alors en correspondance avec les puits de vis portés par le collecteur d'admission. Il s'avère donc nécessaire de réusiner après coup ces puits de vis, ce qui occasionne une augmentation du temps et du coût du montage.

De plus, compte tenu des températures (supérieures à 200°C) auxquelles peut être portée la bride de fixation, il n'est pas possible d'utiliser un tel montage lorsque le collecteur est en matériau plastique ne résistant pas à de si hautes températures.

La présente invention a donc pour objet de proposer un dispositif de recirculation des gaz d'échappement de moteur à combustion interne remédiant aux inconvénients de l'art antérieur précités et qui est à la fois simple et économique à réaliser.

Le dispositif de recirculation des gaz d'échappement d'un moteur à combustion interne, selon l'invention comprend une conduite de recirculation des gaz d'échappement du collecteur d'échappement au collecteur d'admission.

Selon l'invention le dispositif de recirculation des gaz d'échappement est caractérisé en ce que la partie d'embout de la conduite de recirculation est raccordée au collecteur d'admission par l'intermédiaire de moyens de liaison permettant un déplacement relatif de la conduite de recirculation par rapport au collecteur d'admission, ces moyens de liaison assurant de plus l'isolation thermique du collecteur d'admission vis-à-vis de ladite conduite de recirculation et l'étanchéité aux gaz du raccordement.

Selon une autre caractéristique du dispositif de recirculation des gaz d'échappement conformément à l'invention, ces moyens de liaison sont formés par un manchon flexible permettant des déplacements de la conduite de recirculation par rapport au collecteur d'admission dans les trois directions de l'espace.

Selon une autre caractéristique du dispositif de recirculation des gaz d'échappement conformément à l'invention, la partie d'embout de la conduite de recirculation comprend une coupelle venant entourée circonférentiellement la conduite de recirculation, cette coupelle étant directement fixée à l'extrémité de ladite conduite débouchant dans le collecteur d'admission.

Selon une autre caractéristique du dispositif de recirculation des gaz d'échappement conformément à l'invention, le bord rabattu de l'extrémité libre de la coupelle repose sur toute sa circonférence en appui contre une des extrémités du manchon.

Selon une autre caractéristique du dispositif de recirculation des gaz d'échappement conformément à l'invention, le manchon est fixé directement sur la coupelle au moyen d'un collier de serrage.

Selon une autre caractéristique du dispositif de recirculation des gaz d'échappement conformément à l'invention, le manchon est réalisé en un matériau élastique à fort coefficient d'isolation thermique.

Selon une autre caractéristique du dispositif de recirculation des gaz d'échappement conformément à l'invention, le manchon est fait en un matériau élastomère résistant à la température, du type caoutchouc fluorocarboné.

Selon une autre caractéristique du dispositif de recirculation des gaz d'échappement conformément à l'invention, le manchon comporte une partie centrale de forme sensiblement torique.

On comprendra mieux les buts, aspects et avantages de la présente invention, d'après la description présentée ci-après d'un mode de réalisation de l'invention, donné à titre d'exemple non limitatif, en se référant au dessin annexé, dans lequel :

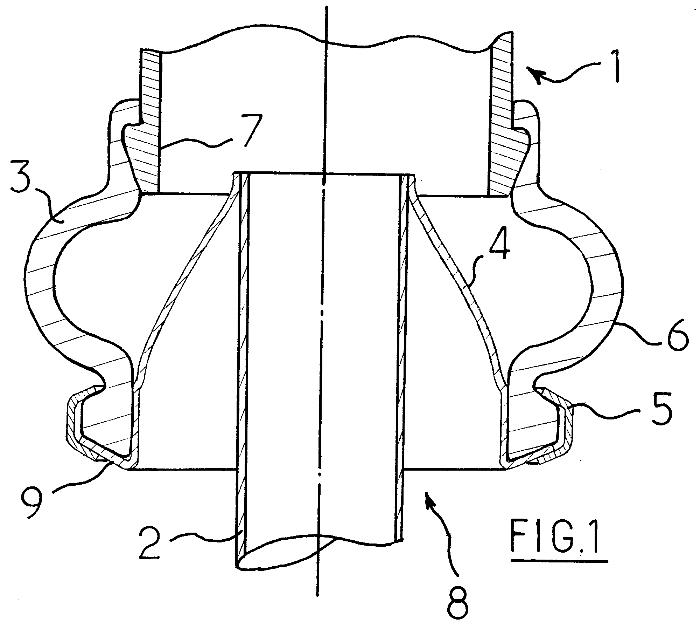

la figure 1 est une vue en coupe du système de fixation de la conduite de recirculation au collecteur d'admission du moteur selon l'invention.

Seuls les éléments nécessaires à la compréhension de l'invention ont été représentés.

Une partie des gaz d'échappement du moteur sont prélevés dans le collecteur d'échappement par une conduite métallique 2 qui les recircule dans le collecteur d'admission d'air 1 du moteur, en aval du papillon des gaz pour les moteurs qui en sont équipés. Une vanne de régulation des gaz, non figurée, est par ailleurs prévue dans la conduite de recirculation pour ajuster le débit des gaz d'échappement recirculés suivant les conditions de fonctionnement du moteur.

La partie d'embout 8 de la conduite métallique de recirculation 2 est connectée à une ouverture 7 correspondante du collecteur d'admission 1 par l'intermédiaire d'un manchon flexible 6. Ce manchon 6 est emmanché à force par une extrémité sur le collecteur d'admission 1 tandis que l'autre extrémité reçoit l'embout 8 de la conduite de recirculation.

L'embout 8 de la conduite de recirculation comprend une coupelle sensiblement conique métallique 4 entourant l'extrémité de la conduite de recirculation destinée à être emmanchée dans l'autre extrémité du manchon 3.

Cette coupelle 4 permet d'abaisser sensiblement la température de l'embout et permet donc son montage dans un manchon flexible. La coupelle 4 est directement solidaire de l'extrémité de la conduite 2, par exemple par soudage, la surface de contact est la plus faible possible pour réduire les transferts thermiques.

La coupelle 4 se termine par une partie cylindrique destinée à venir au contact du manchon 3, cette partie cylindrique présentant à son extrémité libre un bord rabattu 9 destiné à venir en butée contre l'extrémité du manchon 3 La solidarisation du manchon à la coupelle est alors opérée par un simple collier de serrage 5 qui assure l'étanchéité aux gaz de ce montage.

Le manchon flexible 6 est réalisé en un matériau élastique, à faible coefficient de conduction thermique et résistant à des températures de l'ordre de 200°C. On peut par exemple utiliser certains élastomères du type éthylène acrylique (VAMAC) ou polychloroprène, ou encore du type caoutchouc fluorocarboné. L'utilisation d'un tel manchon isolant thermiquement permet donc l'utilisation de collecteur d'admission en matière plastique sans risque de destruction de ce dernier du fait de la température élevée de la conduite de recirculation.

Le manchon 3 comporte par ailleurs une partie centrale 6 de forme sensiblement torique qui crée une chambre annulaire entourant le conduit de recirculation et débouchant dans l'ouverture 7. Cette chambre annulaire, pouvant être balayée par l'air frais d'admission traversant le collecteur 1, contribue à refroidir l'embout 8 de la conduite de recirculation en favorisant les échanges thermiques.

Ainsi grâce au système de fixation de la conduite de recirculation des gaz sur le collecteur d'admission, il est possible d'opérer la fixation de la conduite de recirculation 2 sur le collecteur d'admission 1 alors même que la conduite 2 ne se trouve pas positionnée exactement au centre de l'ouverture 7, du fait notamment de dispersions de fabrication. Il suffit lors du montage de déplacer l'extrémité du manchon au contact de la coupelle 4 en utilisant la flexibilité du manchon.

L'utilisation d'un manchon en élastomère permet d'assurer directement l'étanchéité aux gaz du montage sans avoir recours à des joints d'étanchéité spécifique. La souplesse du manchon 3 permet de plus d'amortir les vibrations de la conduite de recirculation et donc de réduire les émissions sonores. Par ailleurs deux pièces suffisent pour assurer la fixation, ce qui assure la simplicité de montage et le faible coût du système de fixation.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

**[1]** Dispositif de recirculation des gaz d'échappement d'un moteur à combustion interne, du type comprenant une conduite de recirculation (2) des gaz d'échappement du collecteur d'échappement au collecteur d'admission (1), caractérisé en ce que la partie d'embout (8) de la conduite de recirculation (2) est raccordée au collecteur d'admission (1) par l'intermédiaire de moyens de liaison (3) permettant un déplacement relatif de la conduite de recirculation (1) par rapport au collecteur d'admission, lesdits moyens de liaison (3) assurant également l'isolation thermique du collecteur d'admission (1) vis-à-vis de ladite conduite de recirculation (2) et l'étanchéité aux gaz du raccordement.

**[2]** Dispositif de recirculation des gaz d'échappement selon la revendication 1, caractérisé en ce que lesdits moyens de liaison sont formés par un manchon flexible (3) permettant des déplacements de la conduite de recirculation (2) par rapport au collecteur d'admission (1) dans les trois directions de l'espace.

**[3]** Dispositif de recirculation des gaz d'échappement selon l'une quelconque des revendications 1 à 2, caractérisé en ce que la partie d'embout (8) de ladite conduite de recirculation (2) comprend une coupelle (4) venant entourée circonférentiellement la conduite de recirculation (2), ladite coupelle (4) étant directement fixée à l'extrémité de ladite conduite (2) débouchant dans le collecteur d'admission (1).

**[4]** Dispositif de recirculation des gaz d'échappement selon la revendication 3, caractérisé en ce que le bord rabattu (9) de l'extrémité libre de ladite coupelle (4) repose en appui contre une des extrémités dudit manchon (3).

**[5]** Dispositif de recirculation des gaz d'échappement selon la revendication 3, caractérisé en ce que ledit manchon (3) est fixé directement sur ladite coupelle (4) au moyen d'un collier de serrage (5).

**[6]** Dispositif de recirculation des gaz d'échappement selon l'une quelconque des revendications 2 à 5, caractérisé en ce que ledit manchon (3) est réalisé en un matériau élastique à fort coefficient d'isolation thermique.

**[7]** Dispositif de recirculation des gaz d'échappement selon la revendication 6, caractérisé en ce que ledit manchon (3) est réalisé en un matériau élastomère résistant à la température du type caoutchouc fluorocarboné.

**[8]** Dispositif de recirculation des gaz d'échappement selon l'une quelconque des revendications 2 à 7, caractérisé en ce que ledit manchon (3) comporte une partie centrale (6) de forme sensiblement torique.
